(19) Europäisches Patentamt
European Patent Office
Office européen des brevets

(11) Veröffentlichungsnummer: **0 533 015 A1**

# (12) EUROPÄISCHE PATENTANMELDUNG

(21) Anmeldenummer: **92115275.7**

(22) Anmeldetag: **07.09.92**

(51) Int. Cl.⁵: **C08F 236/04**, C08C 19/08

(30) Priorität: **19.09.91 DE 4131186**

(43) Veröffentlichungstag der Anmeldung: **24.03.93 Patentblatt 93/12**

(84) Benannte Vertragsstaaten: **DE FR GB IT**

(71) Anmelder: **BAYER AG**
**W-5090 Leverkusen 1 Bayerwerk(DE)**

(72) Erfinder: **Obrecht, Werner, Dr.**
**Holderberger Strasse 109**
**W-4130 Moers(DE)**
Erfinder: **Oppenheimer-Stix, Christiane, Dr.**
**Am Sporthafen 12**
**W-4040 Neuss 1(DE)**
Erfinder: **Wendling, Peter**
**Franz-Marc-Strasse 9**
**W-5090 Leverkusen 1(DE)**
Erfinder: **Engels, Hans-Wilhelm, Dr.**
**Dickeicherfeld 12**
**W-5014 Kerpen 3(DE)**
Erfinder: **Eisele, Ulrich, Dr.**
**Alfred-Kubin-Strasse 13**
**W-5090 Leverkusen 1(DE)**
Erfinder: **Szentivanyi, Zsolt, Dr.**
**13-11-6-chome, Hatanodai, Shinagawa-ku**
**Tokyo 142(JP)**

## (54) Neue, Schwefel-modifizierte funktionelle Gruppen enthaltende Butadien-Copolymere sowie deren Mischungen mit anderen Kautschuken.

(57) Die neuen Schwefel-modifizierten, funktionelle Gruppen enthaltenden, mit ethylenisch ungesättigten Monomeren copolymerisierten Butadiene, die in Gegenwart von 0,05 bis 2,5 Gew.-Teilen an elementarem Schwefel oder einer äquivalenten Mengen an Schwefelspendern, bezogen auf eingesetzte Monomere, hergestellt werden und wobei die Summe an verwendeten Peptisationsmitteln 0,1 bis 6,0 Gew.-Teile, bezogen auf eingesetzte Monomere, beträgt, können verwendet werden zur Herstellung von Vulkanisaten, auch im Gemisch mit anderen C = C-Doppelbindungen enthaltenden Kautschuken.

EP 0 533 015 A1

Die Erfindung betrifft neue Schwefel-modifizierte, funktionelle Gruppen enthaltende, mit ethylenisch ungesättigten Monomeren copolymerisierte Butadiene sowie deren Mischungen mit anderen C=C-Doppelbindungen enthaltenden Kautschuken.

Schwefelhaltige Butadien-Copolymere sind in der DDR-Patentschrift 211 796 beschrieben. Die Herstellung erfolgt unter Verwendung von Balsam-Extrakt- und/oder Tallharzen, die vorher mit Schwefel disproportioniert wurden. Bei der Disproportionierung unterliegt jedoch zumindest ein Teil des elementaren Schwefels einer chemischen Umwandlung, so daß die bei der Herstellung der Butadien-Copolymeren gewünschte Menge an elementarem Schwefel nicht präzise eingestellt werden kann. Ferner erfolgt während oder nach der Polymerisation keine gezielte Peptisation, die zu funktionellen Gruppen im Polymeren sowie zur gewünschten Polymerviskosität führt.

Gegenstand der Erfindung sind daher Schwefel-modifizierte, funktionelle Gruppen enthaltende, mit ethylenisch ungesättigten Monomeren copolymerisierte Butadiene, die dadurch gekennzeichnet sind, daß sie in Gegenwart von 0,05 bis 2,5 Gew.-Teilen, vorzugsweise 0,1 bis 1,5 Gew.-Teilen, elementaren Schwefels oder einer äquivalenten Menge an Schwefelspendern, bezogen auf eingesetzte Monomere [Butadien + ethylenisch ungesättigtes Monomer], hergestellt werden und wobei die Summe an verwendeten Peptisationsmitteln 0,1 bis 6,0, bevorzugt 0,5 bis 5,0 Gew.-Teile, bezogen auf eingesetzte Monomere, beträgt.

Als Butadiene, die mit den ethylenisch ungesättigten Monomeren copolymerisiert werden können, werden beispielsweise genannt: Butadien und/oder Isopren. Bevorzugt ist Butadien.

Als ethylenisch ungesättigte Monomere, die mit den Butadienen copolymerisiert werden können, kommen beispielsweise in Frage: Acrylnitril, Methacrylnitril, Acrylsäure, Methacrylsäure, Acrylsäure- und Methacrylsäureester, Styrol und $\alpha$-Methylstyrol. Bevorzugt ist Acrylnitril und Styrol. Besonders bevorzugt ist Acrylnitril. Die ethylenisch ungesättigten Monomere können sowohl einzeln als auch im Gemisch untereinander eingesetzt werden.

Die Butadien-Copolymere enthalten die ethylenisch ungesättigten Monomeren in Mengen von 2 bis 60 Gew.-%, bevorzugt 5 bis 50 Gew.-%.

Die Butadiene sind in Mengen von 40 bis 98, bevorzugt 50 bis 95 Gew.-% im Copolymeren eingebaut. Dabei sind die eingebauten Schwefeleinheiten und die funktionellen Gruppen nicht berücksichtigt.

Die Herstellung der Schwefel-modifizierten Butadien-Copolymere erfolgt in Gegenwart von elementarem Schwefel oder in Gegenwart von Schwefelspendern, wie Xanthogenpolysulfiden und Thiurampolysulfiden. Als Vertreter dieser Klassen seien Dipentamethylenthiuramtetra- sowie -hexasulfid genannt.

Bevorzugt ist der Einsatz von elementarem Schwefel. Der Schwefel kann sowohl im Monomeren gelöst als auch als wäßrige Dispersion eingesetzt werden. Bevorzugt ist der Einsatz als wäßrige Dispersion.

Selbstverständlich kann der Schwefel als auch die Schwefelspender im Gemisch untereinander eingesetzt werden.

Als Peptisationsmittel kommen literaturbekannte Verbindungen wie Dithiocarbamate, Thiuramdisulfide, Xanthogenate, Xanthogendisulfide, Mercaptane, Mercaptobenzthiazol und Jodoform in Frage (vgl. W. Obrecht "Methoden der organischen Chemie" (Houben-Weyl), Bd. E20/2 (1987), S. 842 ff, Georg Thieme Verlag, Stuttgart-New York). Bevorzugt sind wasserlösliche Dithiocarbamate und/oder Xanthogenate enthaltend die Anionen:

(1)

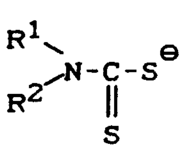

oder

(2)

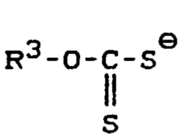

und/oder Thiuramdisulfide und/oder Xanthogendisulfide der Formeln

(3)

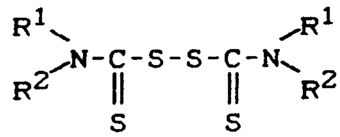

oder

(4)

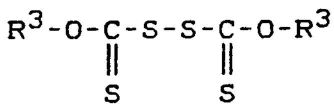

,

worin

$R^1$, $R^2$, $R^3$ gleich oder verschieden sind und für $C_1$-$C_{24}$-Alkyl, $C_5$-$C_{16}$-Cycloalkyl oder $C_5$-$C_{18}$-Aryl, die bis zu 3 Heteroatome enthalten können, stehen und worin $R^1$ und $R^2$ zusammen einen Ring mit 3 bis 5 C-Atomen bilden können, der gebenenfalls durch Heteroatome, bevorzugt 1 Heteroatom, unterbrochen sein kann.

Besonders bevorzugt stehen $R^1$ und $R^2$ unabhängig voneinander für $C_1$-$C_4$-Alkyl und $R^3$ für $C_1$-$C_8$-Alkyl oder 2,2-(2,4-Dioxapentamethylen)-n-butyl der Formel

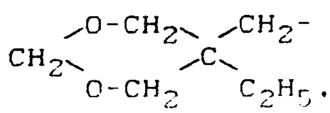

Bevorzugte Heteroatome sind Stickstoff und Sauerstoff.

Bevorzugte Kationen für die Peptisationsmittel (1), (2) sind Alkalimetallionen, insbesondere Natrium- und Kaliumionen, sowie Ammoniumionen.

Durch den Einsatz von Peptisationsmitteln erfolgt eine Spaltung der Schwefelsegmente im Polymeren, die zu funktionellen Gruppen im Polymeren führen (vgl. K. Mitsumichi u.a., Journal of the Society of Rubber Industry, Japan, Vol. 63, S. 322-330 (1990); Y. Miyata u.a., International Rubber Conference Kyoto, 16A-12, S. 217-222 (1985) und A.L. Klebanskii u.a., Journal of Polymer Science, Vol. 30, S. 363-374 (1958), Prague Symposium).

Der Einsatz von Dithiocarbamaten und Thiuramdisulfiden sowie Xanthogenaten und Xanthogendisulfiden führt zu Dithiocarbamat- und Xanthogenat-Funktionen.

Die Peptisationsmittel können auch in Kombination miteinander eingesetzt werden. Die Zugabe kann vor, während oder nach durchgeführter Polymerisation erfolgen. Besonders geeignet ist die Zugabe von Dithiocarbamat und/oder Xanthogenat vor Beginn der Polymerisation, kombiniert mit der Zugabe von Thiuramdisulfid und/oder Xanthogendisulfid im Abstoppschritt der Polymerisation oder zum abgestoppten Latex vor oder nach Entfernung der nichtumgesetzten Monomeren. Hierbei kann eine zusätzliche Zugabe von Mercaptanen und/oder Xanthogendisulfiden vor Polymerisationsbeginn vorteilhaft sein.

Die Herstellung von Schwefel-modifiziertem Butadien-Copolymer erfolgt analog der Herstellung von Schwefelmodifiziertem Polychloropren, wie beispielsweise aus DE 19 11 439, 20 18 736, 27 55 074, 32 46 748, 35 07 825, 26 45 920, EP 21 212, 200 857, FR 14 57 004 und US 22 64 713, 33 78 538, 33 97 173 bekannt (vgl. auch W. Obrecht "Methoden der organischen Chemie" (Houben-Weyl), Bd. E 20/2 (1987), S. 842 ff. Georg Thieme Verlag, Stuttgart-New York).

Die Herstellung kann sowohl durch Lösungs- als auch durch Emulsionspolymerisation in diskontinuierlicher oder kontinuierlicher Fahrweise erfolgen. Bevorzugt ist die Herstellung durch Emulsionspolymerisation bei 0 bis 70 ° C, vorzugsweise 0 bis 50 ° C.

Die erfindungsgemäßen Schwefel-modifizierten Butadien-Copolymeren besitzen im allgemeinen Mooney-Viskositäten (nach DIN 53 523) von 5 bis 140, vorzugsweise von 10 bis 120 ME (ML 1 + 4/100 ° C).

Zur Verbesserung der Lagerstabilität können den erfindungsgemäßen Butadien-Copolymeren Stabilisatoren, wie phenolische, aminische, phosphor- und schwefelhaltige Verbindungen, zugesetzt werden.

Die bevorzugten Schwefel-modifizierten Butadien-Acrylnitril-Copolymeren, im folgenden S-NBR genannt, enthalten neben den polymerisierten Butadieneinheiten 2 bis 60, vorzugsweise 5 bis 50 Gew.-%, bezogen auf Copolymer, copolymerisierte Acrylnitrileinheiten. Unter S-NBR sind auch zu verstehen:

- Mischungen von vernetztem (Gel) mit unvernetztem S-NBR (Sol), wobei unter Gel in Lösungsmitteln, wie Toluol oder Methylethylketon, unlösliche Polymere zu verstehen sind. Der Gelanteil kann bis zu 97 Gew.-% betragen,
- Mischungen von S-NBR mit unterschiedlichen Nitrilgehalten, wobei der Nitrilgehalt der einzelnen Mischungskomponenten 2 bis 60 Gew.-% betragen kann,
- Mischungen aus S-NBR bei deren Herstellung unterschiedliche Mengen an elementarem Schwefel oder äquivalenter Schwefelspender verwendet werden, wobei die bei der Herstellung der einzelnen Mischungskomponenten verwendete Schwefelmenge 0,05 bis 2,5 Gew.-Teile, bezogen auf eingesetzte Monomere, betragen kann,
- Mischungen von S-NBR mit unterschiedlichen Nitrilgehalten und unterschiedlichen, bei der Herstellung verwendeten Schwefelmengen bzw. äquivalenter Schwefelspender. Die Variationsbreite kann bei den einzelnen Mischungskomponenten jeweils zwischen Nitrilgehalten von 2 bis 60 Gew.-% und Schwefelmengen von 0,05 bis 2,5 Gew.-Teilen, bezogen auf eingesetzte Monomere, liegen,
- Mischungen von S-NBR mit vernetztem und/oder unvernetztem, schwefelfreiem NBR (d.h. frei von elementarem Schwefel), sowie Kombinationen der vorgenannten Variationen.

Allgemein ergeben sich die Mengenverhältnisse der Einzelkomponenten aus der Aufgabenstellung der jeweiligen Anwendung. So kann, wie dem Fachmann bekannt, Einfluß auf Rohkautschuk-, Mischungs- und Vulkanisateigenschaften genommen werden. Beispielsweise kann mit dem Gelanteil die Spritzquellung von Extrudaten beeinflußt werden. Die Nitrilgehalte beeinflussen z.B. Eigenschaften wie Kälteflexibilität, Kraftstoffquellung, Zugfestigkeit und Modul der Vulkanisate.

Die Herstellung vernetzter S-NBR's kann durch Polymerisation bis zu hohen Umsätzen oder - bei Monomerzulaufverfahren - durch Polymerisation bei hohen internen Umsätzen erfolgen. Die Vernetzung der S-NBR's kann auch durch Copolymerisation vernetzend wirkender multifunktioneller Verbindungen erreicht werden. Bevorzugte vernetzend wirkende multifunktionelle Comonomere sind Verbindungen mit mindestens 2, vorzugsweise 2 oder 3, copolymerisierbaren C=C-Doppelbindungen, wie z.B. Diisopropenylbenzol, Divinylbenzol, Divinylether, Divinylsulfon, Diallylphthalat, Triallylcyanurat, Triallylisocyanurat, 1,2-Polybutadien, N,N'-m-Phenylendimaleinimid, Triallyltrimellitat sowie die Acrylate und Methacrylate von mehrwertigen, vorzugsweise zwei- bis vierwertigen, $C_2$-$C_{10}$-Alkoholen, wie z.B. von Ethylenglykol, Propandiol-1,2, Propandiol-1,3, Butandiol-1,4, Hexandiol-1,6, Polyethylenglykol mit 2 bis 20, vorzugsweise 2 bis 4, Oxyethyleneinheiten, Trimethylolethan und -propan, Tetramethylolmethan. Bevorzugte vernetzend wirkende Acrylate und Methacrylate umfassen Ethylendiacrylat und -dimethacrylat, Propylendiacrylat und -dimethacrylat, Isobutylendiacrylat und -dimethacrylat, Butylendiacrylat und -dimethacrylat, Hexandioldiacrylat und -dimethacrylat,

Di-, Tri- und Tetraethylenglykoldiacrylat und -dimethacrylat,
Trimethylolethantriacrylat und -trimethacrylat,
Trimethylolpropantriacrylat und -trimethacrylat und/oder
Tetramethylolmethantetraacrylat und -tetramethacrylat.

Die Schwefel-modifizierten Butadien-Copolymere, insbesondere das S-NBR lassen sich ohne Vulkanisationsbeschleuniger mit einer praxisgerechten Vulkanisationsgeschwindigkeit vulkanisieren, Besonders unvernetztes, d.h. lösliches S-NBR (Sol) zeichnet sich durch eine verbesserte, d.h. erhöhte Mastifikation aus, so daß, wie dem Fachmann bekannt, durch diesen Viskositätsabbau ein geringerer Energieverbrauch bei der Mischungsherstellung zu erwarten ist.

Ein weiterer Gegenstand der Erfindung sind also auch die aus den Schwefel-modifizierten, funktionelle Gruppen enthaltenden, mit ethylenisch ungesättigten Monomeren copolymerisierten Butadiene erhaltenen Vulkanisate.

Die Vulkanisation der erfindungsgemäßen Schwefel-modifizierten, funktionelle Gruppen enthaltenden Butadien-Copolymerisate kann in üblicher Weise in Gegenwart von Füllstoffen jeglicher Art durchgeführt werden. Bevorzugte Füllstoffe sind Ruße. Bevorzugte Ruße besitzen Oberflächen von 35 bis 200 $m^2/g$ (CTAB-Bestimmung). Besonders bevorzugte Ruße sind SAF-, HAF-, FEF-, ISAF- und SRF-Ruße und ihre Mischungen. Auch Mischungen von Rußen mit Kieselsäuren (mit und ohne Füllstoffaktivatoren) und Kieselsäuren, die den Rußen vergleichbare Teilchengrößen und Oberflächen besitzen, sind als Füllstoffe gut geeignet. Der Füllstoffgehalt kann in weiten Bereichen variiert werden und sollte, wie dem Fachmann bekannt, der jeweiligen Anwendung angepaßt werden.

Zur Erzielung erwünschter Rohmischungs- oder Vulkanisateigenschaften können den erfindungsgemäßen Butadien-Copolymerisaten die üblichen Verarbeitungshilfsmittel, Weichmacher, Alterungsschutzmittel, Faktisse und Harze zugesetzt werden.

Als Vernetzungssysteme kommen alle in der Kautschuktechnik bekannten Systeme wie Schwefelvernetzung, Peroxidvernetzung, Urethanvernetzung, Metalloxidvernetzung, Harzvernetzung, Strahlenvernetzung und deren Kombinationen in Frage. Das Vernetzungssystem richtet sich nach der Zusammensetzung der erfindungsgemäßen Butadien-Copolymerisate und der jeweiligen Anwendung.

Eine weitere wertvolle Eigenschaft der erfindungsgemäßen Schwefel-modifizierten Butadien-Copolymeren ist, daß sie in Mischungen mit C = C-Doppelbindungen enthaltenden Kautschuken zu verminderten Hystereseverlusten der daraus hergestellten Vulkanisate führen.

Unter Hystereseverlust versteht man in der Kautschuktechnologie die Energiemenge, die bei dynamischer Beanspruchung des Elastomeren irreversibel in Wärme umgewandelt wird. Als Meßgröße für Hystereseverluste dient der tan $\delta$, der als Verhältnis von Verlustmodul zu Speichermodul definiert ist; vgl. z.B. auch DIN 53 513, DIN 53 53 535. Erniedrigung des tan $\delta$ im anwendungstechnisch wichtigen Temperatur/Frequenz- bzw. Amplituden-Bereich führt z.B. zu vermindertem Hitzeaufbau ("heat built-up") im Elastomeren. Reifenlaufflächen aus Kautschukvulkanisat mit vermindertem Hystereseverlust zeichnen sich durch reduzierten Rollwiderstand und infolgedessen durch geringeren Treibstoffverbrauch der damit ausgestatteten Fahrzeuge aus.

Trotz der Vielfalt verfügbarer Kautschuktypen hat sich für die Herstellung von Fahrzeugreifen die Aufmerksamkeit der Fachwelt vor allem auf Naturkautschuk (NR), cis-Polybutadien (BR) und Styrol/Butadien-Copolymerisate (SBR) gerichtet. Diese Kautschuke oder ihre Mischungen werden bei der Reifenherstellung weltweit verwendet.

In der Literatur sind zahlreiche Versuche bekannt, den Rollwiderstand der Reifenlauffläche zu reduzieren. Ein Weg, der beschrieben wurde, sind Mischungen aus C = C-Doppelbindungen enthaltenen Kautschuken und Schwefelmodifiziertem Polychloropren-Gel (EP 405 216). Nachteilig ist jedoch, daß dabei ein unlösliches Polymer (Gel) verwendet werden muß. Die Herstellung des Gels verlangt hohe Umsätze, d.h. längere Polymerisationszeiten oder die zusätzliche Verwendung einer vernetzten Chemikalie. Beides erhöht jedoch die Herstellungskosten. Weitere Nachteile bei der Verwendung von CR-Gel ergeben sich aus dem Kautschukpreis und den beim Recycling-Prozeß von Altreifen zu erwartenden ökologischen Problemen wegen der chlorhaltigen Komponente.

Gegenstand der Erfindung sind daher auch Mischungen aus

A) Schwefel-modifizierten, funktionelle Gruppen enthaltenden, mit ethylenisch ungesättigten Monomeren copolymerisierten Butadienen und

B) anderen C = C-Doppelbindungen enthaltenden Kautschuken,

wobei, bezogen auf die Komponenten A) + B) die Menge an Butadien-Copolymer A) 1 bis 90, vorzugsweise 3 bis 70 Gew.-%, beträgt.

Natürlich kann je nach Anwendung auch ein höherer Anteil an Schwefel-modifiziertem Butadien-Copolymer verwendet werden.

Bevorzugte Schwefel-modifizierte Copolymere A) sind Butadien-Acrylnitril-Copolymere, wie sie im vorangegangenen Text beschrieben worden sind.

Bevorzugte Kautschuke B) enthalten C = C-Doppelbindungen entsprechend Iodzahlen von mindestens 2, vorzugsweise 5 bis 470. Die Bestimmung der Iodzahlen erfolgt im allgemeinen durch Addition von Iodchlorid in Essigsäure nach Wijs, DIN 53 241, Teil 1. Die Iodzahl definiert die Iodmenge in Gramm, die von 100 g Substanz chemisch gebunden wird.

Die Kautschuke B) umfassen u.a. EPDM, Butylkautschuk, Nitrilkautschuk, hydrierten Nitrilkautschuk, Naturkautschuk, Polyisopren, Polybutadien und Styrol/Butadien-Copolymerisate (SBR) sowie Gemische derselben.

Die Kautschuke B) besitzen in der Regel Mooney-Viskositäten (DIN 53 523) von 10 bis 150, vorzugweise von 25 bis 80 (ML 1 + 4)/100 ° C.

Der Ausdruck "EPDM" steht für Ethylen/Propylen/Dien-Terpolymerisate. EPDMs umfassen Kautschuke, in denen das Gewichtsverhältnis von Ethylen- zu Propylenresten im Bereich von 40:60 bis 65:35 liegt und die 1 bis 20 C = C-
Doppelbindungen/1.000 C-Atome aufweisen können. Als geeignete Dien-Monomere im EPDM seien beispielsweise genannt: konjugierte Diene, z.B. Isopren und Budadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclo-diene.

Bevorzugt sind die nichtkonjugierten Diene Hexadien-1,5, Ethyliden-norbornen und Dicyclopentadien. Der Diengehalt im EPDM beträgt vorzugsweise 0,5 bis 10 Gew.-%, bezogen auf EPDM.

Derartige EPDM-Kautschuke sind z.B. in der DE-OS 2 808 709 beschrieben.

Der Begriff "Butylkautschuk" im Sinne der Erfindung umfaßt Isobuten-Copolymerisate aus 95 bis 99,5, vorzugsweise 97,5 bis 99,5, Gew.-% Isobuten und 0,5 bis 5, vorzugsweise 0,5 bis 2,5, Gew.-% copolymerisierbarem Dien, wie z.B. Butadien, Dimethylbutadien, Pentadien-1,3, insbesondere Isopren. Butylkautschuk wird in großtechnischem Maßstab fast ausschließlich als Isobuten/Isopren-Copolymerisat durch kationische Lösungspolymerisation bei niedriger Temperatur hergestellt; vgl. z.B. Kirk-Othmer, Encyclopedia of Chemical Technology, 2nd ed.,

Bd. 7, S 688, Interscience Publ., New York-London-Sydney 1965 und Winnacker-Küchler, Chemische Technologie, 4. Aufl., Bd. 6, S. 550-555, Carl Hanser Verlag, München-Wien 1962.

Der Ausdruck "Nitrilkautschuk" steht für Butadien/Acrylnitril-Copolymerisate mit einem Gehalt an copolymerisiertem Acrylnitril von 5 bis 60, vorzugsweise 10 bis 50 Gew.-%. "Hydriert" bedeutet in diesem Zusammenhang, daß 90 bis 98,5, vorzugsweise 95 bis 98 % der hydrierbaren C=C-Doppelbindungen hydriert sind, während die C=N-Dreifachbindungen der Nitrilgruppen nicht hydriert sind. Die Hydrierung von Nitrilkautschuk ist bekannt; US-PS 3 700 637, DE-OS 25 39 132, 30 46 008, 30 46 251, 32 27 650, 33 29 974, EP-A 111 412, FR-PS 2 540 503.

Bevorzugte Styrol/Butadien-Copolymerisate sind solche mit Gehalten an einpolymerisiertem Styrol von 18 bis 60, vorzugsweise 20 bis 50, Gew.-%. Lösungs- und Emulsionspolymerisate sind besonders bevorzugt.

Den erfindungsgemäßen Kautschukmischungen können selbstverständlich Füllstoffe jeglicher Art zugesetzt werden. Bevorzugte Füllstoffe sind Ruße. Bevorzugte Ruße besitzen Oberflächen von 35 bis 200 $m^2/g$ (CTAB-Bestimmung). Besonders bevorzugte Ruße sind SAF-, HAF-, FEF-, ISAF- und SRF-Ruße und ihre Mischungen. Auch Mischungen von Rußen mit Kieselsäuren (mit und ohne Füllstoffaktivatoren) und Kieselsäuren, die den Rußen vergleichbare Teilchengrößen und Oberflächen besitzen, sind als Füllstoffe gut geeignet. Der Füllstoffgehalt kann in weiten

Bereichen schwanken, liegt aber oft bei 30 bis 80 Gew.-Teilen Füllstoff pro 100 Gewichtsteile Kautschuk (A+B).

Die erfindungsgemäßen Mischungen können auf verschiedene Weise hergestellt werden: zum einen ist es selbstverständlich möglich, die festen Einzelkomponenten zu mischen. Dafür geeignete Aggregate sind beispielsweise Walzen und Innenmischer. Aber auch das Mischen durch Vereinigen der Latices der einzelnen Kautschuke ist geeignet; die Isolierung der so hergestellten erfindungsgemäßen Mischungen kann, wie üblich, durch Eindampfen, Ausfällen oder Gefrierkoagulation (vgl. US-PS 2 187 146) erfolgen. Durch Einmischen von Füllstoffen in die Latexmischungen und anschließende Aufarbeitung können die erfindungsgemäßen Mischungen direkt als Kautschuk/Füllstoff-Formulierungen erhalten werden. Weiterer Gegenstand der Erfindung ist also ein Verfahren zur Herstellung der beschriebenen Mischungen durch Vereinigen der Komponenten.

Zur Erzielung erwünschter Rohmischungs- oder Vulkanisateigenschaften können den erfindungsgemäßen Mischungen die üblichen Verarbeitungshilfsmittel, Weichmacher, Alterungsschutzmittel, Faktisse und Harze zugesetzt werden.

Als Vernetzungssysteme kommen alle in der Kautschuktechnik bekannten Systeme wie Schwefelvernetzung, Peroxidvernetzung, Urethanvernetzung, Metalloxidvernetzung, Harzvernetzung, Strahlenvernetzung und deren Kombinationen in Frage. Bevorzugte Vernetzungssysteme richten sich nach den in den erfindungsgemäßen Mischungen eingesetzten Kautschuken B, wobei Schwefelvernetzungssysteme besonders bevorzugt sind.

Weiterer Gegenstand der Erfindung sind die aus den beschriebenen Mischungen hergestellten Vulkanisate.

Die Vulkanisate der erfindungsgemäßen Mischungen zeigen verminderte Hystereseverluste und eignen sich daher hervorragend für die Herstellung von Reifen.

## Beispiele

1. Herstellung der erfindungsgemäßen Schwefel-modifizierten Butadien-Acrylnitril-Copolymeren A und B

In einem 250 l-Rührreaktor wurde nach folgender Grundrezeptur (Mengenangaben in Gew.-Teilen) polymerisiert:

| | S-NBR A | S-NBR B |
|---|---|---|
| Acrylnitril | 35 | 31,5 |
| Butadien | 65 | 67,5 |
| Divinylbenzol | - | 0,8 |
| entsalztes Wasser (Gesamtmenge) | 155 | 152 |
| K-Salz der Kokosfettsäure | 3,5 | 2,6 |
| Kondensationsprodukt aus Naphthalinsulfonsäure und Formaldehyd (Na-Salz) | 0,5 | 0,4 |
| tert.-Dodecylmercaptan | 0,07 | 0,15 |
| Schwefel | 0,4 | 0,6 |
| Triethanolamin | 0,44 | 0,88 |
| Dibutyldithiocarbamat (Na-Salz) | 2,0 | 2,0 |
| Kaliumperoxodisulfat (Gesamtmenge) | 0,92 | 1,84 |

und wie folgt bei 70 % Umsatz abgestoppt und stabilisiert:

| | | |
|---|---|---|
| Tetraethylthiuramdisulfid | 1,5 | 1,5 |
| Vulkanox KB® (Alterungsschutzmittel der Fa. Bayer AG) | 1,25 | 1,25 |

Die Herstellung erfolgte unter Stickstoffatmosphäre. Im Rührreaktor wurde die wäßrige Phase (pH-Wert = 12) bestehend aus entsalztem Wasser, K-Salz der Kokosfettsäure, Triethanolamin und Na-Salz des Kondensationsproduktes aus Naphthalinsulfonsäure und Formaldehyd vorgelegt. Dann wurden nacheinander Acrylnitril, bei S-NBR B zusammen mit Divinylbenzol, sowie Butadien zugegeben. Der Schwefel wurde als 50 %ige wäßrige Dispersion und Dibutyldithiocarbamat (Na-Salz) als 30 %ige wäßrige Lösung zugegeben. Die Temperatur der nun gebildeten Emulsion wurde auf 25 °C eingestellt, die Polymerisation mit Kaliumperoxydisulfat in Form einer 3,5 %igen wäßrigen Lösung gestartet, bei 25 °C durch Zugabe von weiterem Kaliumperoxodisulfat unterhalten und bis zu einem Umsatz von 70 % durchgeführt.

Durch Zugabe von Tetraethylthiuramdisulfid in Form einer 25 %igen wäßrigen Emulsion einer toluolischen Lösung (25 Gew.-% Tetraethylthiuramdisulfid, 37 Gew.-% Toluol, 6 Gew.-% Na-Salz des Kondensationsproduktes aus Naphthalinsulfonsäure und Formaldehyd, 3,2 Gew.-% Dodecylsulfat (Na-Salz), 28,8 Gew.-% entsalztes Wasser) wird die Polymerisation abgestoppt. Der Latex wurde durch Zyklonentgasung mittels Dampf unter Vakuum vom nicht umgesetzten Monomeren befreit und mit 2,6-Ditert.-Butyl-o-kresol in Form einer wäßrigen Dispersion stabilisiert.

Der Latex wurde mit 20 %iger NaCl-Lösung bei 22 °C gefällt, das erhaltene Polymer bei Raumtemperatur chloridfrei gewaschen und bei 60 °C im Umlufttrockenschrank getrocknet.

Die Mooney-Viskosität des S-NBR betrug 40 ME (ML 1 + 4/100 °C). S-NBR B wies einen Gelgehalt von 88 % und einen Quellungsindex von 10 auf, jeweils gemessen in Toluol.

2. Herstellung des NBR 1

Die Herstellung entsprach dem des S-NBR A, jedoch wurde kein elementarer Schwefel und kein Thiuramdisulfid verwendet. Die Menge an tert.-Dodecylmercaptan betrug 0,3 Gew,-%, bezogen auf Monomere. Die Polymerisation wurde mit 1,2 Gew.-% Na-dithionit, bezogen auf Monomere, bei 70 % Umsatz abgestoppt. Die Entgasung, die Stabilisierung und die Isolierung des Polymeren erfolgte wie beim S-NBR A. Das Polymere des Vergleichsbeispiels 1 wies eine Mooney-Viskosität von 42 ME (ML 1 + 4/100 ° C) auf.

3. Herstellung des Schwefel-modifizierten CR-Gels nach EP 0 405 216

In einem 250 l Rührreaktor wurde nach der folgenden Grundrezeptur (Mengenangaben in Gewichtsteilen) polymerisiert:

| | |
|---|---|
| Chloropren | 95 |
| Ethylenglykoldimethacrylat | 5 |
| entsalztes Wasser (Gesamtmenge) | 125 |
| Na-Salz der disproportionierten Abietinsäure | 5,3 |
| Na-Salz des Kondensationsproduktes aus Naphthalinsulfonsäure und Formaldehyd | 0,6 |
| KOH | 0,5 |
| $K_2S_2O_8$ | 0,11 |
| Na-Salz der Anthrachinonsulfonsäure | 0,06 |
| Schwefel | 0,5 |
| Na-dibutyldithiocarbamat (DBDTC) | 1,0 |
| Tetraethylthiuramdisulfid (TETD) | 3,0 |

Im Reaktor wurde die wäßrige Phase bestehend aus entsalztem Wasser, Na-Salz der disproportionierten Abietinsäure, Na-Salz der methylen-verbrückten Naphthalinsulfonsäure, Na-Salz der Anthrachinonsulfonsäure und KOH vorgelegt, mit Stickstoff gespült und auf 30 ° C aufgeheizt.

Dann wurden die mit Stickstoff gespülten Monomeren zugegeben. Der Vernetzer Ethylenglykoldimethacrylat war im Monomeren gelöst. Nach Einstellung der vorgesehenen Reaktionstemperatur von 30 ° C wurden der Schwefel als 50 gew.-%ige Dispersion und DBDTC als 30 gew.-%ige Lösung zugesetzt. Dann wurde mit einer geringen Menge einer mit Stickstoff gespülten verdünnten wäßrigen $K_2S_2O_8$-Lösung initiiert und dann die Polymerisation durch Zudosieren dieser wäßrigen mit Stickstoff gespülten Persulfatlösung aufrechterhalten.

Der Umsatz wurde gravimetrisch verfolgt. Beim Umsatz von 83 % wurde mit 0,03 Gew.-Teilen, bezogen auf Latex, einer wäßrigen 2,5 gew.-%igen Lösung von Diethylhydroxylamin abgestoppt, und der Latex mit Tetraethylthiuramdisulfid (TETD) versetzt. TETD wurde als 25 gew.-%ige wäßrige Emulsion in einer toluolischen Lösung eingesetzt.

Der Latex wurde auf ca. 500 ppm Restchloropren (bezogen auf Latex) entgast.

Das Schwefel-modifizierte Polychloropren-Gel wurde aus dem Latex durch Zugabe von 2 gew.-%iger wäßriger $CaCl_2$-Lösung gefällt (5 g $CaCl_2$ pro 100 g Feststoff) und bei 60 ° C im Vakuumtrockenschrank getrocknet.

4. Anwendungstechnische Prüfungen

An dem erfindungsgemäßen S-NBR A und dem NBR 1 wurde das Mastikationsverhalten ermittelt. Hierzu wurden die Polymeren 8 Minuten bei 40 ° C auf einer Laborwalze bei kleiner Wulst mastiziert und danach die Mooney-Viskosität (ML 1 + 4/100 ° C) gemessen.
Folgende Ergebnisse wurden erhalten:

| | O-Wert (ME) | 8 Minuten-Wert (ME) |
|---|---|---|
| Beispiel 1 (Polymer S-NBR A) | 40 | 29 |
| Vergleichsbeispiel 1 (Polymer NBR 1) | 42 | 38 |

Das Vulkanisationsverhalten wurde an folgender Grundmischung 1 getestet (Vulkanisationstemperatur 150 ° C):

| Polymer | 100 Gew.-Teile |
|---|---|
| ® Ruß Corax N 550[1)] | 50 |
| ®ZnO aktiv[2)] | 3,0 |
| ®Magelite DE[3)] | 2,0 |
| ®Vulkanox HS[4)] | 1,0 |
| ®Vulkanox OCD[5)] | 1,0 |
| ®Vulkanox ZMB 2[6)] | 2,0 |
| ®Vulkanol OT[7)] | 5,0 |

1) Handelsprodukt der Fa. Degussa/Hanau
2) Zinkoxid aktiv, Handelsprodukt der Fa. Bayer AG, Leverkusen
3) Magnesiumoxid, Handelsprodukt der Fa. Merck & Co. Inc. USA
4) 2,2,4-Trimethyl-1,2-dihydrochinolin, Polymer (Alterungsschutzmittel), Handelsprodukt der Fa. Bayer AG, Leverkusen
5) octyliertes Diphenylamin (Alterungsschutzmittel), Handelsprodukt der Fa. Bayer AG, Leverkusen
6) Zn-Salz des 4- bzw. 5-Methylmercaptobenzimidazols (Alterungsschutzmittel), Handelsprodukt der Fa. Bayer AG, Leverkusen
7) Etherthioether (Weichmacher) Handelsprodukt der Fa. Bayer AG, Leverkusen

Die Mischungsherstellung erfolgte in einem 1,5 l Kneter bei 100 °C.

Beispiel 2

Bei dem Beispiel 2 wurde das erfindungsgemäße S-NBR A in der Grundmischung 1 eingesetzt.

Vergleichsbeispiel 2

Bei dem Vergleichsbeispiel 2 wurde das NBR 1 in der Grundmischung 1 eingesetzt und zusätzlich 1,5 Gew.-Teile Schwefel und 2,0 Vulkacit CZ (Benzothiazyl-2-cyclohexylsulfenamid, Vulkanisationsbeschleuniger, Handelsprodukt der Fa. Bayer AG, Leverkusen) hinzugefügt.

Die folgende Tabelle zeigt, daß das erfindungsgemäße Beispiel 2 ohne Vulkanisationsbeschleuniger zu praxisgerechten Vulkanisationsgeschwindigkeiten führt:

| | Vulkanisation bei 150 °C | | |
|---|---|---|---|
| | $t_{10}$ (Min) | $t_{70}$ (Min) | $t_{90}$ (Min) |
| Beispiel 2 | 1,6 | 3,7 | 7,0 |
| Vergleichsbeispiel 2 | 2,6 | 4,1 | 7,6 |

Beispiele 3 und 4 und Vergleichsbeispiele 3 und 4

Mit der folgenden Testmischung 2 soll gezeigt werden, daß die erfindungsgemäßen Mischungen von Schwefel-modifizierten Butadien-Copolymeren mit anderen C=C-Doppelbindungen enthaltenden Kautschuken zu Vulkanisaten führen, die verminderte Hystereseverluste aufweisen.

Testmischung 2

| | |
|---|---|
| ®Buna SL 750[1]* | 123,8 Gew.-Teile |
| zusätzliches Polymer** | 10,0 Gew.-Teile |
| ®Ruß Corax N 220[2] | 70,0 Gew.-Teile |
| ®ZnO-RS[3] | 3,0 Gew.-Teile |
| Stearinsäure | 1,0 Gew.-Teile |
| ®Vulkanox 4010 NA[4] | 1,0 Gew.-Teile |
| Schwefel | 1,8 Gew.-Teile |
| ®Vulkacit NZ[5] | 1,2 Gew.-Teile |

1) Lösungs-SBR mit einem Gehalt an einpolymerisiertem Styrol von 18 Gew.-%, ölverstreckt (37,5 Gew.-% Öl), Handelsprodukt der Fa. Buna Werke Hüls AG/Marl

2) Handelsprodukt der Fa. Degussa/Hanau

3) Zinkoxid, Handelsprodukt der Fa. Zinkweiß-Forschungsgesellschaft mbH

4) N-Isopropyl-N'-phenyl-p-phenylendiamin (Alterungsschutzmittel) Handelsprodukt der Fa. Bayer AG/Leverkusen

5) tert.-Butyl-benzthiazyl-sulfenamid (Vulkanisationsbeschleuniger) Handelsprodukt der Fa. Bayer AG/Leverkusen

* bei alleiniger Verwendung von Buna SL 750 werden 137,5 Gew.-Teile eingesetzt (Vergleichsbeispiel)

** S-NBRA (Beispiel 3), S-NBRB (Beispiel 4), Schwefel-modifiziertes CR-Gel nach EP 0 405 216 (Vergleichsbeispiel 4)

Mischungsherstellung

| | |
|---|---|
| Zusätzliches Polymer | 10,0 Gew.-Teile |
| Buna SL 750 | 123,8 Gew.-Teile |
| (bei alleiniger Verwendung) | 137,5 Gew.-Teile |
| Ruß N 220 | 70,0 Gew.-Teile |
| Vulkanox 4010 NA® | 1,0 Gew.-Teile |
| ZnO-RS | 3,0 Gew.-Teile |
| Stearinsäure | 1,0 Gew.-Teile |

Die Polymeren wurden im Innenmischer verschnitten (Jackettemperatur 120 °C, 80 UpM) und gemäß der angegebenen Rezeptur fertig compoundiert. Die Zugabe von 1,8 Gew.-Teilen Schwefel und 1,2 Gew.-Teilen Beschleuniger (Vulkacit® NZ) erfolgte auf einer Walze bei 60 °C.

Vulkanisation

Es wurden 1 mm Platten bei 150 °C vulkanisiert. Die Vulkanisationszeit betrug 20 Minuten.

Die hier beschriebene Mischungsherstellung und Vulkanisation gilt sowohl für die erfindungsgemäßen Beispiele, als auch für die Vergleichsbeispiele.

Anwendungstechnische Eigenschaften

An den erhaltenen Vulkanisaten der Beispiele und der Vergleichsbeispiele wurden folgende Daten ermittelt:

| Eigenschaften | Bestimmungsmethode |
|---|---|
| Zugfestigkeit (MPa) | DIN 53 504 |
| Reißdehnung (%) | DIN 53 504 |
| Spannungswert bei 300 % Dehnung (MPa) | DIN 53 504 |
| tan delta bei 70 °C | MER = Mechanical |
| tan delta bei 90 °C | Energy Resolver 1100 A der Fa. Imass |

Eigenschaften der erfindungsgemäßen Beispiele 3 und 4 und der Vergleichsbeispiele 3 und 4

| | zusätzliches Polymer | tan delta 70° C | tan delta 90° C | Zugfestigkeit (MPa) | Reißdehnung (%) | Modul 300 (MPa) |
|---|---|---|---|---|---|---|
| Beispiel 3 | S-NBR A | 0,091 | 0,089 | 21,7 | 440 | 14,3 |
| Beispiel 4 | S-NBR B | 0,089 | 0,089 | 20,0 | 430 | 12,6 |
| Vergleichs-beispiel 3 | - | 0,114 | 0,117 | 21,9 | 490 | 9,4 |
| Vergleichs-beispiel 4 | schwefel-modifiziertes CR-Gel (EP- 0 405 216) | 0,090 | 0,086 | 22,2 | 380 | 17,1 |

Wie die Ergebnisse in der vorhergehenden Tabelle zeigen (Beispiele 3, 4 und Vergleichsbeispiel 3), werden mit den erfindungsgemäßen Mischungen Vulkanisate erhalten, die einen deutlich geringeren Hystereseverlust aufweisen als der reine Reifenkautschuk (Vergleichsbeispiel 3).

Die Werte der erfindungsgemäßen Mischungen (Beispiele 3 und 4) sind innerhalb der Fehlergrenze vergleichbar mit Mischungen, die Schwefel-modifiziertes Polychloropren-Gel (Vergleichsbeispiel 4) enthalten. Die Verwendung von Schwefel-modifiziertem Polychloropren-Gel hat jedoch die im Text beschriebenen Nachteile (Kosten, ökologische Probleme).

## Patentansprüche

1. Schwefel-modifizierte, funktionelle Gruppen enthaltende, mit ethylenisch ungesättigten Monomeren copolymerisierte Butadiene, dadurch gekennzeichnet, daß sie in Gegenwart von 0,05 bis 2,5 Gew.-Teilen an elementarem Schwefel oder einer äquivalenten Menge an Schwefelspendern, bezogen auf eingesetzte Monomere, hergestellt werden und wobei die Summe an verwendeten Peptisationsmitteln 0,1 bis 6,0 Gew.-Teilen, bezogen auf eingesetzte Monomere, beträgt.

2. Schwefel-modifizierte Butadien-Polymere nach Anspruch 1, dadurch gekennzeichnet, daß sie mit Acrylnitril copolymerisiert werden.

3. Schwefel-modifizierte Butadien-Copolymere nach Ansprüchen 1 und 2, dadurch gekennzeichnet, daß als Schwefelspender Thiurampolysulfide und/oder Xanthogenpolysulfide eingesetzt werden.

4. Schwefel-modifizierte Butadien-Polymere nach Ansprüchen 1 bis 3, dadurch gekennzeichnet, daß als Peptisationsmittel wasserlösliche Dithiocarbamate und/oder Xanthogenate basierend auf den Anionen

   (1)

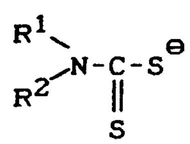

   oder
   (2)

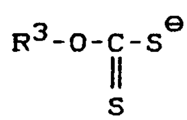

   und/oder Thiuramdisulfide und/oder Xanthogendisulfide der Formeln
   (3)

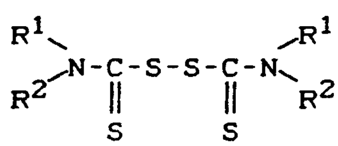

   oder
   (4)

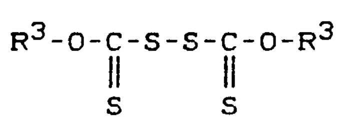

,

   worin

   $R^1$, $R^2$, $R^3$ gleich oder verschieden sind und für $C_1$-$C_{24}$-Alkyl, $C_5$-$C_{16}$-Cycloalkyl oder $C_5$-$C_{18}$-Aryl,

die bis zu 3 Heteroatome enthalten können, stehen und worin $R^1$ und $R^2$ zusammen einen Ring mit 3 bis 5 C-Atomen bilden können, der gegebenenfalls durch Heteroatome unterbrochen sein kann,

eingesetzt werden.

**5.** Mischungen aus

A) Schwefel-modifizierten Butadien-Copolymeren des Anspruchs 1 und

B) anderen C = C-Doppelbindungen enthaltenden Kautschuken,

wobei, bezogen auf die Komponenten A) + B), die Menge an Butadien-Copolymer A) 1 bis 90 Gew.-% beträgt.

**6.** Mischungen nach Anspruch 5, dadurch gekennzeichnet, daß das Butadien-Copolymer A) ein Butadien-Acrylnitril-Copolymer darstellt.

**7.** Mischungen nach Ansprüchen 5 und 6, dadurch gekennzeichnet, daß der Kautschuk B) aus der Reihe EPDM, Butylkautschuk, Nitrilkautschuk, hydriertem Nitrilkautschuk, Naturkautschuk, Polyisopren, Polybutadien und SBR ausgewählt ist.

**8.** Verwendung der Schwefel-modifizierten Butadien-Copolymere des Anspruchs 1 zur Herstellung von Vulkanisaten.

**9.** Verwendung der Mischungen des Anspruchs 5 zur Herstellung von Vulkanisaten.

Europäisches Patentamt

# EUROPÄISCHER RECHERCHENBERICHT

Nummer der Anmeldung

EP 92 11 5275

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-2 234 204 (H.W.STARKWEATHER ET AL.) 11. März 1941 * Spalte 6, Zeile 3; Anspruch 1 * | 1-2,4 | C08F236/04 C08C19/08 |
| X | US-A-4 269 250 (J.G.HARRISON) * Spalte 4, Zeile 11 - Zeile 22; Anspruch 13 * | 5-9 | |
| X | GB-A-529 838 (E.I. DU PONT DE NEMOURS) 29. November 1940 * Seite 2, Zeile 29; Anspruch 2 * | 1-2,4 | |
| X | US-A-3 373 146 (G.E.MEYER ET AL.) * Spalte 5, Zeile 57 - Zeile 66; Anspruch 5 * | 1-2 | |
| A | US-A-2 248 107 (K.MEISENBURG ET AL.) 8. Juli 1941 * Anspruch 8 * | 3 | |
| | | | RECHERCHIERTE SACHGEBIETE (Int. Cl.5 ) |
| | | | C08F C08C C08L |

Der vorliegende Recherchenbericht wurde für alle Patentansprüche erstellt

| Recherchenort | Abschlußdatum der Recherche | Prüfer |
|---|---|---|
| DEN HAAG | 10 NOVEMBER 1992 | VAN HUMBEECK F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)